# EUROPEAN PATENT SPECIFICATION

(11) **EP 4 024 524 B1**
(45) Date of publication and mention of the grant of the patent: **25.03.2026**
(21) Application number: 20855996.3
(22) Date of filing: 16.07.2020
(51) Int. Cl.: H01M 4/525, H01M 10/0525, H01M 10/0567, H01M 10/0568

(54) **NON-AQUEOUS ELECTROLYTE SECONDARY BATTERY**
SEKUNDÄRBATTERIE MIT NICHTWÄSSRIGEM ELEKTROLYTEN
BATTERIE SECONDAIRE À ÉLECTROLYTE NON-AQUEUX

(30) Priority: 30.08.2019 JP 2019159023
(43) Date of publication of application: 06.07.2022
(73) Proprietor: Panasonic Intellectual Property Management Co., Ltd., Osaka-shi, Osaka 540-6207 (JP)
(72) Inventor: KANO Akira, Osaka-shi, Osaka 540-6207 (JP); TERADA Shoshi, Osaka-shi, Osaka 540-6207 (JP)
(74) Representative: Vigand, Philippe
(86) International application number: PCT/JP2020/027608
(87) International publication number: WO 2021/039178

(56) References cited:
- WO-A1-2015/045340
- CN-A- 109 494 406
- DE-A1- 102013 016 675
- JP-A- 2008 282 617
- JP-A- 2010 177 030
- JP-A- 2014 143 061
- JP-A- 2019 003 941
- JP-A- 2019 526 914
- H. XIANG ET AL: "The Role of Cesium Cation in Controlling Interphasial Chemistry on Graphite Anode in Propylene Carbonate-Rich Electrolytes", APPLIED MATERIALS & INTERFACES, vol. 7, no. 37, 10 September 2015 (2015-09-10), US, pages 20687 - 20695, XP055607731, ISSN: 1944-8244, DOI: 10.1021/acsami.5b05552

## Description

### [Technical Field]

The present disclosure relates to a non-aqueous electrolyte secondary battery.

### [Background Art]

Non-aqueous electrolyte secondary batteries, particularly lithium ion secondary batteries, because of their high voltage and high energy density, have been expected as promising power sources for small consumer applications, power storage devices, and electric vehicles.

Patent Literature 1 proposes a lithium ion secondary battery in which the non-aqueous liquid electrolyte contains lithium bis(fluorosulfonyl)imide (LiFSI) and lithium bisoxalatoborate (LiBOB). Patent Literature 1 teaches that this can suppress the reduction in the capacity and the rate characteristics.

Patent Literature 2 describes a lithium-ion secondary battery, comprising a positive electrode with a nickel-rich lithium composite oxide of formula LiNi_{0.8}Co_{0.15}Al_{0.05}O₂ as active material, in association with a non-aqueous electrolyte comprising a lithium salt, preferably LiPF₆, dissolved in a non-aqueous organic solvent, to which a mixture of lithium, potassium and/or sodium (fluoro-)oxalatophosphate salts is added.

Patent Literatures 3 to 6 also refer to electrolyte compositions for electrochemical devices, comprising a lithium salt as main solute and an alkali or alkaline earth metal salt as additive or co-solute.

Non-Patent Literature 1 teaches the addition of cesium salts to a battery electrolyte comprising a lithium salt dissolved in a carbonate-based solvent, for controlling the interfacial chemistry on a graphite anode.

Patent Literature 7 refers to the use of an electrolyte solution comprising a lithium salt and a magnesium bis(oxalato)borate salt, as surface-treating agent for a lithium complex oxide to be used as positive electrode active material in a lithium-ion secondary battery.

Patent Literatures 8 and 9 describe non-aqueous electrolyte secondary batteries, comprising a positive electrode including a nickel-rich lithium composite oxide as active material, wherein the content of Ni is 89 mole percent or more (PTL 8) or comprised between 70 and 98 mole percent (PTL 9).

### [Citation List]

### [Patent Literature]

[PTL 1] Japanese Laid-Open Patent Publication No. 2016-139610
[PTL 2] : JP 2008 282617 A
[PTL 3] : CN 109 494 406 A
[PTL 4] : JP 2014 143061 A
[PTL 5] : DE 10 2013 016675 A1
[PTL 6] : JP 2019 526914 A
[PTL 7] : JP 2010 177030 A
[PTL 8] : WO 2015/045340 A1
[PTL 9] : JP 2019 003941 A

### [Non-Patent Literature]

[NPL 1] : H. Xiang et al., Applied Materials & Interfaces, vol. 7, no. 37, 10 September 2015 (2015-09-10), pages 20687-20695

### [Summary of Invention]

A composite oxide containing lithium and a metal (esp. transition metal) has been used as a positive electrode active material for a lithium ion secondary battery. As the composite oxide containing lithium and a transition metal, lithium cobaltate (LiCoO₂) has been used.

On the other hand, with a recent price hike in cobalt due to increasing demand, there has been desired to use a positive electrode active material not containing Co. In this respect, various attempts have been made to use a composite oxide in which the Co content is lowered by replacing some of the metals constituting the composite oxide from Co to another metal element. In particular, a lithium nickel composite oxide containing Ni as a transition metal is expected because of its high capacity.

However, when the Co content is lowered, the composite oxide containing lithium and a transition metal tends to change its crystal structure, with repeated charge and discharge, into one that hardly absorbs and releases lithium ions, and the capacity retention ratio tends to be reduced.

In view of the above, one aspect of the present disclosure relates to a non-aqueous electrolyte secondary battery, including: a positive electrode; a separator; a negative electrode facing the positive electrode, with the separator interposed; and a liquid electrolyte, wherein the positive electrode includes a composite oxide containing lithium as a first metal, and a second metal other than lithium; in the composite oxide, the second metal contains Ni, a content of Ni in the second metal is 90 at% or more, and a content of Co in the second metal is 10 at% or less; and the liquid electrolyte contains at least one cation X selected from the group consisting of Na⁺, K⁺, Rb⁺, Cs⁺, Fr⁺, Mg²⁺, Ca²⁺, Sr²⁺, Ba²⁺, and Al³⁺, and an oxalate complex anion Y, the liquid electrolyte further contains PF₆⁻ ions, and a ratio of a content by mole of the oxalate complex anion Y in the liquid electrolyte to a content by mole of the PF₆⁻ ions in the liquid electrolyte is 0.1 or greater and 0.5 or less.

According to the present disclosure, in a non-aqueous electrolyte secondary battery using a composite oxide containing lithium and a transition metal, the reduction in the capacity retention ratio can be suppressed, while the content of Co in the whole metal is lowered.

### [Brief Description of Drawing]

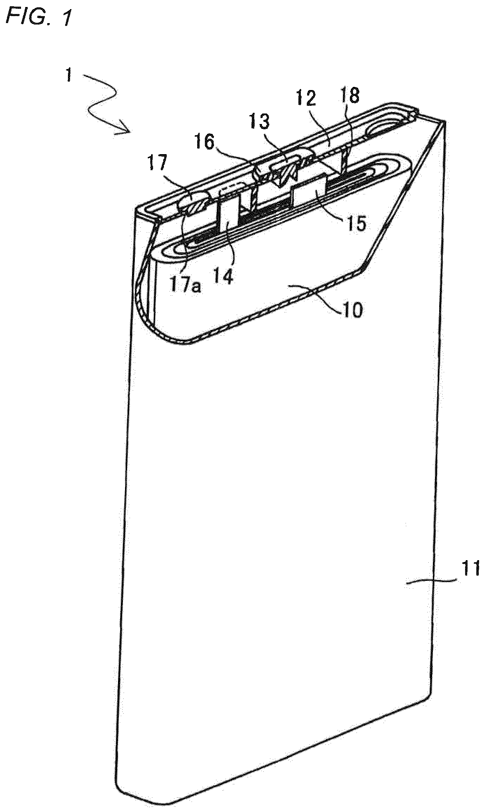

[FIG. 1] A partially cut-away schematic oblique view of a non-aqueous electrolyte secondary battery according to one embodiment of the present disclosure.

### [Description of Embodiments]

A non-aqueous electrolyte secondary battery according to an embodiment of the present disclosure includes a positive electrode, a separator, a negative electrode facing the positive electrode, with the separator interposed, and a liquid electrolyte. The positive electrode includes a composite oxide (hereinafter sometimes referred to as a "lithium-containing composite oxide") containing lithium (a first metal), and a second metal other than lithium. In the composite oxide, the second metal contains Ni, the content of Ni in the second metal is 90 at% or more, and the content of Co in the second metal is 10 at% or less.

In the non-aqueous electrolyte secondary battery, while including a lithium-containing composite oxide, the content of Co in the second metal is lowered to 10 at% or less. Moreover, the second metal contains Ni, and the content of Ni in the second metal is raised to 90 at% or more, which can lead to a higher capacity.

On the other hand, in the non-aqueous electrolyte secondary battery, during charge and discharge, the ionic valence of Ni in the lithium-containing composite oxide fluctuates in association with absorption and release of lithium ions, and the fluctuation in the ionic valence of Ni tends to cause the crystal structure of the lithium-containing composite oxide to be unstable. Especially when the content of Co is 10 at% or less, the lithium-containing composite oxide is likely to change its crystal structure into one that hardly absorbs and releases lithium ions (i.e., to be inactivated), and the capacity retention ratio is likely to be reduced.

However, by containing at least one cation X selected from the group consisting of Na⁺, K⁺, Rb⁺, Cs⁺, Fr⁺, Mg²⁺, Ca²⁺, Sr²⁺, Ba²⁻, and Al³⁺, and an oxalate complex anion Y in the liquid electrolyte, the reduction in the capacity retention ratio can be suppressed.

In the non-aqueous electrolyte secondary battery, usually, a fluorine compound is contained in a lithium salt (e.g., LiPF₆) in the liquid electrolyte, a solvent (e.g., fluoroethylene carbonate (FEC)) or an additive of the liquid electrolyte, or a binder (e.g., polyvinylidene fluoride (PVdF)) which may be included in the positive electrode and the negative electrode. These fluorine compounds are decomposed, and can form a fluoride surface film containing a cation X and fluorine at the surface layer of the lithium-containing composite oxide serving as a positive electrode (or positive electrode active material). For example, when the cation X is cesium ions, a surface film containing cesium fluoride CsF is formed. The fluoride surface film thus formed is considered to suppress the irreversible structural change of the lithium-containing composite oxide due to a side reaction with the liquid electrolyte. As a result, the reduction in the capacity retention ratio can be suppressed.

The fluoride surface film is considered to be present in such a state that LiF and the fluoride containing a cation X are mixed. The ion radius of the cation X is different from that of lithium ion, and in the fluoride surface film, a gap that allows lithium ions to pass through can be present around the cation X. The fluoride surface film is therefore unlikely to be an inhibition to the migration of lithium ions, and the capacity retention ratio can be maintained high. In particular, when the ion radius of the cation X is larger than that of lithium ion, the gap tends to increase, making it easy to maintain the capacity retention ratio high.

Furthermore, when the liquid electrolyte contains an oxalate complex anion Y, the reduction in the capacity retention ratio can be further suppressed. The oxalate complex anion Y is decomposed at a negative electrode to form a surface film at the surface layer of the negative electrode active material. In addition, the oxalate complex anion Y (or its decomposition product) is considered to adhere to the fluoride surface film at the surface layer of the positive electrode active material or to be incorporated into the fluoride surface film, thereby to stabilize the fluoride surface film. As a result, a surface film which is dense and is unlikely to inhibit the migration of lithium ions can be formed at the surface layer of the positive electrode active material, which can suppress excessive side reactions, and can further suppress the reduction in the capacity retention ratio. Note that the above-described mechanism is based on the observation by the inventors at the time of the invention, and the present invention is not limited thereto.

The oxalate complex anion Y may be at least one selected from the group consisting of B(C₂O₄)₂⁻, BF₂(C₂O₄)⁻, P(C₂O₄)₃⁻, PF₂(C₂O₄)₂⁻, and PF₄(C₂O₄)⁻.

The oxalate complex anion Y may contain fluorine. In this case, the oxalate complex anion Y, when decomposed, can supply a fluorine component for the fluoride surface film. The oxalate complex anion Y containing fluorine may be at least one selected from BF₂(C₂O₄)⁻, PF₂(C₂O₄)₂⁻, and PF₄(C₂O₄)⁻.

The cation X and the oxalate complex anion Y may be added in the form of their salt to the liquid electrolyte. The cation X in the form of a salt with another anion, and a lithium salt of the oxalate complex anion Y may be added to the liquid electrolyte.

The lithium-containing composite oxide can be a compound having a layered rock-salt type crystal structure containing lithium and a transition metal. The lithium-containing composite oxide contains at least nickel as a transition metal of the above layered compound. In the lithium-containing composite oxide, the atomic fraction of nickel in the metal elements other than lithium is 0.9 or more. The atomic fraction of cobalt in the metal elements other than lithium is 0.1 or less. The atomic fraction of cobalt in the metal elements other than lithium may be 0.05 or less.

Specifically, the lithium-containing composite oxide may include a material represented by a composition formula: LiₐNi_{1-x-y}CoₓM_{y}O₂. In the formula, 0 < a ≤ 1.2, 0 ≤ x ≤ 0.1, 0 ≤ y ≤ 0.1, and 0 < x+y ≤ 0.1. The M is at least one selected than a group consisting of Na, Mg, Sc, Y, Mn, Fe, Cu, Zn, Al, Cr, Pb, Sb, and B, and is preferably Al. The value "a" representing the molar ratio of lithium is subjected to increase and decrease during charge and discharge. The cobalt ratio x may be 0 < x ≤ 0.05, and may be 0.01 ≤ x ≤ 0.05.

A detailed description will be given below of a non-aqueous electrolyte secondary battery according to an embodiment of the present disclosure. The non-aqueous electrolyte secondary battery includes, for example, a liquid electrolyte, a negative electrode, and a positive electrode as described below.

### [Liquid electrolyte]

The liquid electrolyte usually includes a non-aqueous solvent, and a solute dissolved in the non-aqueous solvent. The solute can contain a lithium salt. The solute is an electrolytic salt to be ionically dissociated in the liquid electrolyte. The components of the liquid electrolyte other than the solvent and the solute are additives. The liquid electrolyte can include various additives. The cation X and the oxalate complex anion Y can be contained as additives in the liquid electrolyte.

The non-aqueous solvent may be, for example, a cyclic carbonic acid ester, a chain carbonic acid ester, a cyclic carboxylic acid ester, a chain carboxylic acid ester, or the like. Examples of the cyclic carbonic acid ester includes propylene carbonate (PC), ethylene carbonate (EC), and vinylene carbonate (VC). Examples of the chain carbonic acid ester includes diethyl carbonate (DEC), ethyl methyl carbonate (EMC), and dimethyl carbonate (DMC). Examples of the cyclic carboxylic acid ester includes γ-butyrolactone (GBL) and γ-valerolactone (GVL). Examples of the chain carboxylic acid ester includes methyl acetate, ethyl acetate, propyl acetate, methyl propionate (MP), and ethyl propionate (EP). These non-aqueous solvents may be used singly or in combination of two or more kinds.

The non-aqueous solvent is not limited to the above, and may be, for example, cyclic ethers, chain ethers, nitriles such as acetonitrile, and amides such as dimethylformamide.

Examples of the cyclic ether include 1,3-dioxolane, 4-methyl-1,3-dioxolane, tetrahydrofuran, 2-methyl tetrahydrofuran, propylene oxide, 1,2-butylene oxide, 1,3-dioxane, 1,4-dioxane, 1,3,5-trioxane, furan, 2-methylfuran, 1,8-cineole, and crown ether.

Examples of the chain ether include 1,2-dimethoxyethane, dimethyl ether, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethyleneglycol dimethylether, diethyleneglycol diethylether, diethyleneglycol dibutylether, 1,1-dimethoxymethane, 1,1-diethoxyethane, triethyleneglycol dimethylether, and tetraethyleneglycol dimethyl ether.

These solvents may be a fluorinated solvent in which one or more hydrogen atoms are substituted by fluorine atoms. The fluorinated solvent may be fluoroethylene carbonate (FEC).

Examples of the lithium salt include a lithium salt of a chlorine-containing acid (e.g., LiClO₄, LiAlCl₄, LiB₁₀Cl₁₀), a lithium salt of a fluorine-containing acid (e.g., LiPF₆, LiPF₂O₂, LiBF₄, LiSbF₆, LiAsF₆, LiCF₃SO₃, LiCF₃CO₂), a lithium salt of a fluorine-containing acid imide (e.g., LiN(FSO₂)₂, LiN(CF₃SO₂)₂, LiN(CF₃SO₂)(C₄F₉SO₂), LiN(C₂F₅SO₂)₂), and a lithium halide (e.g., LiCl, LiBr, LiI). These lithium salts may be used singly or in combination of two or more kinds.

The contents of the lithium salt, the cation X, and the oxalate complex anion Y in the liquid electrolyte can be measured using, for example, NMR, ion chromatography, or the like.

The concentration of the lithium salt in the liquid electrolyte is preferably 1 mol/liter or more and 2 mol/liter or less, preferably 1 mol/liter or more and 1.5 mol/liter or less. By controlling the lithium salt concentration in the above range, a liquid electrolyte having excellent ion conductivity and moderate viscosity can be obtained. The lithium salt concentration, however, is not limited to the above. The oxalate complex anion Y can also be added in the form of a lithium salt to the liquid electrolyte. When the oxalate complex anion Y is included, the concentration of the lithium salt means a total concentration of the oxalate complex anion Y and the anion of a lithium salt except the oxalate complex anion Y (i.e., a lithium ion concentration).

The concentration of the cation X in the liquid electrolyte may be 0.01 mol/liter or more. In this case, the reduction in the capacity retention ratio can be sufficiently suppressed. The concentration of the cation X may be 0.05 mol/liter or more, or 0.1 mol/liter or more. In view of suppressing the reduction in the lithium ion conductivity, the concentration of the cation X in the liquid electrolyte may be set to 0.5 mol/liter or less.

The concentration of the oxalate complex anion Y in the liquid electrolyte may be 0.01 mol/liter or more. However, the higher the concentration of the oxalate complex anion Y is, the more likely the oxalate complex anion Y is to be decomposed, to generate a gas. For suppressing the gas generation, the concentration of the oxalate complex anion Y in the liquid electrolyte may be set to 0.5 mol/liter or less.

The liquid electrolyte may include the above LiPF₆ as a lithium salt. According to the present invention, the ratio of a content by mole of the oxalate complex anion Y to a content by mole of the PF₆⁻ions in the liquid electrolyte is set to be 0.1 or greater and 0.5 or less. When LiPF₆ which is a lithium salt with high dissociation degree is contained in such a ratio, the lithium ion conductivity sufficient for the liquid electrolyte can be obtained.

The liquid electrolyte may contain one or more other known additives. Examples of the additives include 1,3-propanesultone, methylbenzene sulfonate, cyclohexylbenzene, biphenyl, diphenyl ether, and fluorobenzene.

### [Negative electrode]

The negative electrode includes, for example, a negative electrode current collector, and a negative electrode active material layer formed on a surface of the negative electrode current collector. The negative electrode active material layer can be formed by, for example, applying a negative electrode slurry formed of a negative electrode material mixture including a negative electrode active material, a binder and the like dispersed in a dispersion medium, onto a surface of the negative electrode current collector, followed by drying. The applied film after drying may be rolled, if necessary. That is, the negative electrode active material may be a material mixture layer. Alternatively, a lithium metal foil or a lithium alloy foil may be laminated on the negative electrode current collector. The negative electrode active material layer may be formed on one surface or both surfaces of the negative electrode current collector.

The negative electrode active material layer contains the negative electrode active material as an essential component, and can include a binder, a conductive agent, a thickener and the like as optional components. For the binder, the conductive agent, and the thickener, any known material can be used.

The negative electrode active material includes a material that electrochemically absorbs and releases lithium ions, lithium metal, and/or a lithium alloy. Examples of the material that electrochemically absorbs and releases lithium ions include a carbon material and an alloy-type material. Examples of the carbon material include graphite, graphitizable carbon (soft carbon), and non-graphitizable carbon (hard carbon). Preferred among them is graphite, which is excellent in stability during charge and discharge and has small irreversible capacity. The alloy-type material may be a material containing at least one kind of metal capable of forming an alloy with lithium, which is exemplified by silicon, tin, a silicon alloy, a tin alloy, and a silicon compound. These materials combined with oxygen, such as a silicon oxide and a tin oxide, may be used.

The alloy-type material containing silicon may be, for example, a silicon composite material having a lithium ion conductive phase, and silicon particles dispersed in the lithium ion conductive phase. The lithium ion conductive phase may be, for example, a silicon oxide phase, a silicate phase and/or a carbon phase. The main component (e.g., 95 to 100 mass%) of the silicon oxide phase can be silicon dioxide. In particular, a composite material composed of a silicate phase and silicon particles dispersed in the silicate phase is preferred in terms of its high capacity and small irreversible capacity.

The silicate phase may contain, for example, at least one selected from the group consisting of Group 1 elements and Group 2 elements in the long periodic table. Examples of the Group 1 and Group 2 elements in the long periodic table that can be used include lithium (Li), potassium (K), sodium (Na), magnesium (Mg), calcium (Ca), strontium (Sr), and barium (Ba). The silicate phase may contain another element, such as aluminum (Al), boron (B), lanthanum (La), phosphorus (P), zirconium (Zr), and titanium (Ti). In particular, a silicate phase containing lithium (hereinafter sometimes referred to as a lithium silicate phase) is preferable because of its small irreversible capacity and excellent charge and discharge efficiency in the initial stage.

The lithium silicate phase may be an oxide phase containing lithium (Li), silicon (Si), and oxygen (O), and may contain another element. The atomic ratio: O/Si of O to Si in the lithium silicate phase is, for example, greater than 2 and 4 or less. Preferably, the O/Si is greater than 2 and less than 3. The atomic ratio: Li/Si of Li to Si in the lithium silicate phase is, for example, greater than 0 and less than 4. The lithium silicate phase can have a composition represented by a formula: Li_{2z}SiO_{2+z}, where 0 < z < 2. The z preferably satisfies 0 < z < 1, and is more preferably z = 1/2. Examples of the elements other than Li, Si and O that can be contained in the lithium silicate phase include iron (Fe), chromium (Cr), nickel (Ni), manganese (Mn), copper (Cu), molybdenum (Mo), zinc (Zn), and aluminum (Al).

The carbon phase may be composed of, for example, an amorphous carbon having low crystallinity. The amorphous carbon may be, for example, hard carbon, soft carbon, or others.

Examples of the negative electrode current collector include a non-porous electrically conductive substrate (e.g., metal foil) and a porous electrically conductive substrate (e.g., mesh, net, punched sheet). The negative electrode current collector may be made of, for example, stainless steel, nickel, a nickel alloy, copper, or a copper alloy.

### [Positive electrode]

The positive electrode include, for example, a positive electrode current collector, and a positive electrode material mixture layer formed on a surface of the positive electrode current collector and containing a positive electrode active material. The positive electrode material mixture layer can be formed by applying a positive electrode slurry formed of a positive electrode material mixture including a positive electrode active material, a binder, and the like dispersed in a dispersion medium, onto a surface of the positive electrode current collector, followed by drying. The applied film after drying may be rolled, if necessary. The positive electrode material mixture layer may be formed on one surface or both surfaces of the positive electrode current collector.

The positive electrode active material may be, for example, a lithium-containing composite oxide represented by the above formula: LiₐNi_{1-x-y}CoₓM_{y}O₂, where 0 < a ≤ 1.2, 0 ≤ x ≤ 0.1, 0 ≤ y ≤ 0.1, 0 < x+y ≤ 0.1, and the M is at least one selected than a group consisting of Na, Mg, Sc, Y, Mn, Fe, Cu, Zn, Al, Cr, Pb, Sb, and B. In view of the stability of the crystal structure, the M may include Al. A specific example of such a composite oxide is a lithium-nickel-cobalt-aluminum composite oxide (e.g., LiNi_{0.9}Co_{0.05}Al_{0.05}O₂, LiNi_{0.91}Co_{0.06}Al_{0.03}O₂).

The form and the thickness of the positive electrode current collector may be respectively selected from the forms and the ranges corresponding to those of the negative electrode current collector. The positive electrode current collector may be made of, for example, stainless steel, aluminum, an aluminum alloy, or titanium.

### [Separator]

Usually, it is desirable to interpose a separator between the positive electrode and the negative electrode. The separator is excellent in ion permeability and has moderate mechanical strength and electrically insulating properties. The separator may be, for example, a microporous thin film, a woven fabric, or a nonwoven fabric. The separator is preferably made of, for example, polyolefin, such as polypropylene or polyethylene.

In an exemplary structure of the non-aqueous electrolyte secondary battery, an electrode group formed by winding the positive electrode and the negative electrode with the separator interposed therebetween is housed together with a non-aqueous electrolyte in an outer case. The wound-type electrode group may be replaced with a different form of the electrode group, for example, a stacked-type electrode group formed by stacking the positive electrode and the negative electrode with the separator interposed therebetween. The non-aqueous electrolyte secondary battery may be in any form, such as cylindrical type, prismatic type, coin type, button type, or laminate type.

FIG. 1 is a partially cut-away schematic oblique view of a non-aqueous electrolyte secondary battery according to an embodiment of the present disclosure.

The battery includes a bottomed prismatic battery case 11, and an electrode group 10 and a non-aqueous electrolyte (not shown) housed in the battery case 11. The electrode group 10 has a long negative electrode, a long positive electrode, and a separator interposed therebetween and preventing them from directly contacting with each other. The electrode group 10 is formed by winding the negative electrode, the positive electrode, and the separator around a flat plate-like winding core, and then removing the winding core.

A negative electrode lead 15 is attached at its one end to the negative electrode current collector of the negative electrode, by means of welding or the like. A positive electrode lead 14 is attached at its one end to the positive electrode current collector of the positive electrode, by means of welding or the like. The negative electrode lead 15 is electrically connected at its other end to a negative electrode terminal 13 disposed at a sealing plate 12. A gasket 16 is disposed between the sealing plate 12 and the negative electrode terminal 13, and electrically insulates one from the other. The positive electrode lead 14 is connected to the sealing plate 12, and thus electrically connected to the battery case 11 serving as a positive electrode terminal. A resin frame member 18 is disposed on top of the electrode group 10, the frame member serving to separate the electrode group 10 from the sealing plate 12, as well as to separate the negative electrode lead 15 from the battery case 11. The opening of the battery case 11 is sealed with the sealing plate 12. The sealing plate 12 is provided with an injection hole 17a, and the electrolyte is injected through the injection hole 17a into the prismatic battery case 11. Thereafter, the injection hole 17a is closed with a sealing stopper 17.

The non-aqueous electrolyte secondary battery may be of a cylindrical shape, a coin shape, a button shape or the like including a battery case made of metal, and may be a laminate type battery including a battery case made of a laminate sheet which is a laminate of a barrier layer and a resin sheet. In the present disclosure, the type, shape, and the like of the secondary battery are not particularly limited.

The present disclosure will be specifically described below with reference to Examples and Comparative Examples. It is to be noted, however, the present disclosure is not limited to the following Examples.

### <Example 1>

### [Production of negative electrode]

Graphite serving as a negative electrode active material, sodium carboxymethylcellulose (CMC-Na), styrene-butadiene rubber (SBR), and water were mixed in a predetermined mass ratio, to prepare a negative electrode slurry. Next, the negative electrode slurry was applied onto a surface of a copper foil serving as a negative electrode current collector, and the applied film was dried, and then rolled. A negative electrode material mixture layer was thus formed on both surfaces of the copper foil.

### [Production of positive electrode]

A lithium-containing composite oxide (LiNi_{0.9}Co_{0.05}Al_{0.05}O₂) serving as a positive electrode active material, acetylene black, polyvinylidene fluoride, and N-methyl-2-pyrrolidone (NMP) were mixed in a predetermined mass ratio, to prepare a positive electrode slurry. Next, the positive electrode slurry was applied onto a surface of an aluminum foil serving as a positive electrode current collector, and the applied film was dried, and then rolled. A positive electrode material mixture layer was thus formed on both surfaces of the aluminum foil.

### [Preparation of non-aqueous liquid electrolyte]

To a mixed solvent including fluoroethylene carbonate (FEC), ethyl methyl carbonate (EMC), and dimethyl ether (DME) in a volume ratio of 4:1:15, LiPF₆ was added as a lithium salt, and cesium difluorooxalate borate (CsBF₂(C₂O₄)) was added as a salt of the cation X and the oxalate complex anion Y, to prepare a non-aqueous liquid electrolyte. The concentration of LiPF₆ in the non-aqueous liquid electrolyte was set to 1.0 mol/liter. The concentration of CsBF₂(C₂O₄) in the non-aqueous liquid electrolyte was set to 0.1 mol/liter.

### [Fabrication of non-aqueous electrolyte secondary battery]

The positive electrode and the negative electrode, with a lead tab attached to each electrode, were wound spirally with a separator interposed therebetween such that the leads were positioned at the outermost layer, thereby to form an electrode group. The electrode group was inserted into an outer case made of a laminate film including an aluminum foil as a barrier layer, and dried under vacuum at 105 °C for 2 hours. The non-aqueous liquid electrolyte was injected into the case, and the opening of the outer case was sealed. A battery A1 was thus obtained.

### <Example 2>

In the preparation of the non-aqueous liquid electrolyte, magnesium difluoroxalate borate (Mg(BF₂(C₂O₄))₂ was used instead of CsBF₂(C₂O₄). The concentration of Mg(BF₂(C₂O₄))₂ in the non-aqueous liquid electrolyte was set to 0.1 mol/liter.

Except for the above, a non-aqueous electrolyte secondary battery was fabricated in the same manner as in Example 1. A battery A2 was thus obtained.

### <Comparative Example 1>

In the preparation of the non-aqueous liquid electrolyte, CsBF₂(C₂O₄) was not added.

Except for the above, a non-aqueous electrolyte secondary battery was fabricated in the same manner as in Example 1. A battery B1 was thus obtained.

### <Comparative Example 2>

LiNi_{0.8}Co_{0.15}Al_{0.05}O₂ was used as a lithium-containing composite oxide serving as a positive electrode active material.

Also, in the preparation of the non-aqueous liquid electrolyte, CsBF₂(C₂O₄) was not added.

Except for the above, a non-aqueous electrolyte secondary battery was fabricated in the same manner as in Example 1. A battery B2 was thus obtained.

### <Comparative Example 3>

LiNi_{0.8}Co_{0.15}Al_{0.05}O₂ was used as a lithium-containing composite oxide serving as a positive electrode active material.

Except for the above, a non-aqueous electrolyte secondary battery was fabricated in the same manner as in Example 1. A battery B3 was thus obtained.

### <Comparative Example 4>

LiNi_{0.8}Co_{0.15}Al_{0.05}O₂ was used as a lithium-containing composite oxide serving as a positive electrode active material.

Except for the above, a non-aqueous electrolyte secondary battery was fabricated in the same manner as in Example 2. A battery B4 was thus obtained.

### [Evaluation]

### (Initial charge and discharge)

Each of the completed batteries was placed in a 25 °C environment, and was subjected to a constant-current charge at a current of 0.3 It until the voltage reached 4.1 V and then to a constant-voltage charge at a constant voltage of 4.1 V until the current reached 0.02 It. This was followed by a constant-current discharge at a current of 0.3 It until the voltage dropped to 2.85 V, to measure an initial discharge capacity C₀. The charge and discharge were performed in a 25 °C environment.

### (Capacity retention ratio)

The rest time between charge and discharge was se to 10 minutes. A cycle of charge and discharge was repeated 100 cycles in total under the above charge and discharge conditions in a 25 °C environment, to measure a discharge capacity C₁ at the 100th cycle. The ratio R₁ = C₁/C₀ of the discharge capacity C₁ to the initial discharge capacity C₀ was calculated as a percentage, which was evaluated as a capacity retention ratio.

The evaluation results of the initial discharge capacity C₀ and the capacity retention ratio R₁ in the batteries A1, A2 and B1 to B4 are shown in Table 1. The positive electrode active material and the additive used in each battery are also shown in Table 1. Table 1 shows that in the batteries A1 and A2, the initial discharge capacity C₀ was excellent, and, the capacity retention ratio R₁ was also high, as compared to in the batteries B1 to B4.

In the battery B1 including the lithium-containing composite oxide in which the ratio of cobalt was low and the ratio of nickel was high, the capacity retention ratio R₁ was considerably low, as compared to in the battery B2. On the other hand, in the batteries B2 to B4 including the lithium-containing composite oxide in which the ratio of cobalt was high and the ratio of nickel was low, the initial discharge capacity C₀ was small.

In the batteries B2 to B4, the addition of the cation X and the oxalate complex anion Y to the liquid electrolyte was not effective in improving the capacity retention ratio R₁, and the capacity retention ratio R₁ was reduced by adding the cation X and the oxalate complex anion Y. On the other hand, in the batteries A1 and A2, the addition of the cation X and the oxalate complex anion Y was effective, and the capacity retention ratio R₁ was significantly improved as compared to in the battery B1.

**[Table 1]**

| Battery | Positive electrode active material | Additive | Initial discharge capacity C₀ /[mAh/g] | Capacity retention ratio R₁ /[%] |
|---|---|---|---|---|
| A1 | LiNi_{0.9}Co_{0.05}Al_{0.05}O₂ | CsBF₂(C₂O₄) | 205 | 95.6 |
| A2 | LiNi_{0.9}Co_{0.05}Al_{0.05}O₂ | Mg(BF₂(C₂O₄))₂ | 204 | 94.2 |
| B1 | LiNi_{0.9}Co_{0.05}Al_{0.05}O₂ | - | 205 | 93.8 |
| B2 | LiNi_{0.8}Co_{0.15}Al_{0.05}O₂ | - | 198 | 95.2 |
| B3 | LiNi_{0.8}Co_{0.15}Al_{0.05}O₂ | CsBF₂(C₂O₄) | 198 | 95.1 |
| B4 | LiNi_{0.8}Co_{0.15}Al_{0.05}O₂ | Mg(BF₂(C₂O₄))₂ | 194 | 94.6 |

### [Industrial Applicability]

According to the non-aqueous electrolyte secondary battery of the present disclosure, a non-aqueous electrolyte secondary battery having a high capacity, and containing less cobalt can be provided. The non-aqueous electrolyte secondary battery of the present disclosure is useful as a main power source for mobile communication equipment, portable electronic equipment, and other devices.

### [Reference Signs List]

- 1: non-aqueous electrolyte secondary battery
- 10: electrode group
- 11: battery case
- 12: sealing plate
- 13: negative electrode terminal
- 14: positive electrode lead
- 15: negative electrode lead
- 16: gasket
- 17: sealing stopper
- 17a: injection hole
- 18: frame

## Claims

1. A non-aqueous electrolyte secondary battery, comprising: a positive electrode; a separator; a negative electrode facing the positive electrode, with the separator interposed; and a liquid electrolyte, wherein
the positive electrode includes a composite oxide containing lithium as a first metal, and a second metal other than lithium;
in the composite oxide, the second metal contains Ni, a content of Ni in the second metal is 90 at% or more, and a content of Co in the second metal is 10 at% or less; and
the liquid electrolyte contains at least one cation X selected from the group consisting of Na⁺, K⁺, Rb⁺, Cs⁺, Fr⁺, Mg²⁺, Ca²⁺, Sr²⁺, Ba²⁺, and Al³⁺, and an oxalate complex anion Y;
the liquid electrolyte further contains PF₆⁻ ions; and
a ratio of a content by mole of the oxalate complex anion Y in the liquid electrolyte to a content by mole of the PF₆⁻ ions in the liquid electrolyte is 0.1 or greater and 0.5 or less.

2. The non-aqueous electrolyte secondary battery according to claim 1, wherein the oxalate complex anion Y includes at least one selected from the group consisting of B(C₂O₄)₂⁻, BF₂(C₂O₄)⁻, P(C₂O₄)₃⁻, PF₂(C₂O₄)₂⁻, and PF₄(C₂O₄)⁻.

3. The non-aqueous electrolyte secondary battery according to claim 1 or 2, wherein the oxalate complex anion Y contains fluorine.

4. The non-aqueous electrolyte secondary battery according to any one of claims 1 to 3, wherein the oxalate complex anion Y is contained at a concentration of 0.5 mol/liter or less in the liquid electrolyte.

5. The non-aqueous electrolyte secondary battery according to any one of claims 1 to 4, wherein the cation X is contained at a concentration of 0.01 mol/liter or more and 0.5 mol/liter or less in the liquid electrolyte.

6. The non-aqueous electrolyte secondary battery according to any one of claims 1 to 5, wherein the cation X includes at least one selected from the group consisting of Rb⁺, Cs⁺, Fr⁺, Mg²⁺, Ca²⁺, Sr²⁺, Ba²⁺, and Al³⁺

7. The non-aqueous electrolyte secondary battery according to any one of claims 1 to 5, wherein the cation X includes at least one selected from the group consisting of Cs⁺ and Mg²⁺.

8. The non-aqueous electrolyte secondary battery according to any one of claims 1 to 7, wherein the composite oxide includes a material represented by a composition formula: LiₐNi_{1-x-y}CoₓM_{y}O₂, where 0 < a ≤ 1.2, 0 ≤ x ≤ 0.1, 0 ≤ y ≤ 0.1, 0 < x+y ≤ 0.1, and M is at least one selected than the group consisting of Na, Mg, Sc, Y, Mn, Fe, Cu, Zn, Al, Cr, Pb, Sb, and B.

9. The non-aqueous electrolyte secondary battery of claim 8, wherein the M includes Al.

10. The non-aqueous electrolyte secondary battery of claim 8 or 9, wherein the composite oxide satisfies 0 < x ≤ 0.05.

## Patentansprüche

1. Sekundärbatterie mit wasserfreiem Elektrolyt, umfassend: eine positive Elektrode; einen Separator; eine negative Elektrode, die der positiven Elektrode zugewandt ist, wobei der Separator eingeschoben ist; und einen flüssigen Elektrolyt, wobei
die positive Elektrode ein Verbundoxid einschließt, das Lithium als ein erstes Metall und ein zweites Metall, bei dem es sich nicht um Lithium handelt, enthält;
in dem Verbundoxid das zweite Metall Ni enthält, wobei ein Ni-Gehalt in dem zweiten Metall 90 Atom-% oder mehr beträgt und ein Co-Gehalt in dem zweiten Metall 10 Atom-% oder weniger beträgt; und
der flüssige Elektrolyt mindestens ein Kation X, das aus der Gruppe bestehend aus Na⁺, K⁺, Rb⁺, Cs⁺, Fr⁺, Mg²⁺, Ca²⁺, Sr²⁺, Ba²⁺ und Al³⁺ ausgewählt ist, und ein Oxalatkomplexanion Y enthält;
der flüssige Elektrolyt ferner PF₆⁻-Ionen enthält; und
ein Verhältnis eines Molgehalts des Oxalatkomplexanions Y in dem flüssigen Elektrolyt zu einem Molgehalt der PF₆⁻-Ionen in dem flüssigen Elektrolyt 0,1 oder mehr und 0,5 oder weniger beträgt.

2. Sekundärbatterie mit wasserfreiem Elektrolyt nach Anspruch 1, wobei das Oxalatkomplexanion Y mindestens eines einschließt, das aus der Gruppe bestehend aus B(C₂O₄)₂⁻; BF₂(C₂O₄)⁻; P(C₂O₄)₃⁻; PF₂(C₂O₄)₂⁻ und PF₄(C₂O₄)⁻ ausgewählt ist.

3. Sekundärbatterie mit wasserfreiem Elektrolyt nach Anspruch 1 oder 2, wobei das Oxalatkomplexanion Y Fluor enthält.

4. Sekundärbatterie mit wasserfreiem Elektrolyt nach einem der Ansprüche 1 bis 3, wobei das Oxalatkomplexanion Y in einer Konzentration von 0,5 Mol/Liter oder weniger in dem flüssigen Elektrolyt enthalten ist.

5. Sekundärbatterie mit wasserfreiem Elektrolyt nach einem der Ansprüche 1 bis 4, wobei das Kation X in einer Konzentration von 0,01 Mol/Liter oder mehr und 0,5 Mol/Liter oder weniger in dem flüssigen Elektrolyt enthalten ist.

6. Sekundärbatterie mit wasserfreiem Elektrolyt nach einem der Ansprüche 1 bis 5, wobei das Kation X mindestens eines einschließt, das aus der Gruppe bestehend aus Rb⁺, Cs⁺, Fr⁺, Mg²⁺, Ca²⁺, Sr²⁺, Ba²⁺ und Al³⁺ ausgewählt ist.

7. Sekundärbatterie mit wasserfreiem Elektrolyt nach einem der Ansprüche 1 bis 5, wobei das Kation X mindestens eines einschließt, das aus der Gruppe bestehend aus Cs⁺ und Mg²⁺ ausgewählt ist.

8. Sekundärbatterie mit wasserfreiem Elektrolyt nach einem der Ansprüche 1 bis 7, wobei das Verbundoxid ein Material einschließt, das durch eine Zusammensetzungsformel dargestellt ist: LiₐNi_{1-x-y}CoₓM_{y}O₂, wobei 0 < a ≤ 1, 2, 0 ≤ x ≤ 0,1, 0 ≤ y ≤ 0,1, 0 < x + y ≤ 0,1, und M mindestens eines ist, das aus der Gruppe bestehend aus Na, Mg, Sc, Y, Mn, Fe, Cu, Zn, Al, Cr, Pb, Sb und B ausgewählt ist.

9. Sekundärbatterie mit wasserfreiem Elektrolyt nach Anspruch 8, wobei das M Al einschließt.

10. Sekundärbatterie mit wasserfreiem Elektrolyt nach Anspruch 8 oder 9, wobei das Verbundoxid 0 < x ≤ 0,05 erfüllt.

## Revendications

1. Batterie rechargeable à électrolyte non aqueux, comprenant : une électrode positive ; un séparateur ; une électrode négative faisant face à l'électrode positive, avec le séparateur qui est interposé ; et un électrolyte liquide, dans laquelle
l'électrode positive comprend un oxyde composite contenant du lithium en tant que premier métal, et un deuxième métal autre que le lithium ;
dans l'oxyde composite, le deuxième métal contient du Ni, la teneur en Ni dans le deuxième métal est de 90 % atomiques ou plus, et la teneur en Co dans le deuxième métal est de 10 % atomiques ou moins ; et
l'électrolyte liquide contient au moins un cation X choisi parmi le groupe constitué par Na⁺, K⁺, Rb⁺, Cs⁺, Fr⁺, Mg²⁺, Ca²⁺, Sr²⁺, Ba²⁺, et Al³⁺, et un anion complexe d'oxalate Y ;
l'électrolyte liquide contient en outre des ions PF₆⁻ ; et
le rapport de la teneur en moles de l'anion complexe d'oxalate Y dans l'électrolyte liquide à la teneur en moles des ions PF₆⁻ dans l'électrolyte liquide est de 0,1 ou plus et 0,5 ou moins.

2. Batterie rechargeable à électrolyte non aqueux selon la revendication 1, dans laquelle l'anion complexe d'oxalate Y comprend au moins l'un choisi parmi le groupe constitué par B(C₂O₄)₂⁻, BF₂(C₂O₄)⁻, P(C₂O₄)₃⁻, PF₂(C₂O₄)₂⁻, et PF₄(C₂O₄)⁻.

3. Batterie rechargeable à électrolyte non aqueux selon la revendication 1 ou 2, dans laquelle l'anion complexe d'oxalate Y contient du fluor.

4. Batterie rechargeable à électrolyte non aqueux selon l'une quelconque des revendications 1 à 3, dans laquelle l'anion complexe d'oxalate Y est contenu à une concentration de 0,5 mole/litre ou moins dans l'électrolyte liquide.

5. Batterie rechargeable à électrolyte non aqueux selon l'une quelconque des revendications 1 à 4, dans laquelle le cation X est contenu à une concentration de 0,01 mole/litre ou plus et 0,5 mole/litre ou moins dans l'électrolyte liquide.

6. Batterie rechargeable à électrolyte non aqueux selon l'une quelconque des revendications 1 à 5, dans laquelle le cation X comprend au moins l'un choisi parmi le groupe constitué par Rb⁺, Cs⁺, Fr⁺, Mg²⁺, Ca²⁺, Sr²⁺, Ba²⁺ et Al³⁺.

7. Batterie rechargeable à électrolyte non aqueux selon l'une quelconque des revendications 1 à 5, dans laquelle le cation X comprend au moins l'un choisi parmi le groupe constitué par Cs⁺ et Mg²⁺.

8. Batterie rechargeable à électrolyte non aqueux selon l'une quelconque des revendications 1 à 7, dans laquelle l'oxyde composite comprend un matériau représenté par la formule de composition : LiₐNi_{1-x-y}CoₓM_{y}O₂ où 0 < a < 1, 2, 0 < x < 0, 1, 0 < y < 0, 1, 0 < x+y < 0, 1, et M est au moins l'un choisi parmi le groupe constitué par Na, Mg, Sc, Y, Mn, Fe, Cu, Zn, Al, Cr, Pb, Sb et B.

9. Batterie rechargeable à électrolyte non aqueux selon la revendication 8, dans laquelle M comprend de l'Al.

10. Batterie rechargeable à électrolyte non aqueux selon la revendication 8 ou 9, dans laquelle l'oxyde composite satisfait à 0 < x < 0,05.
